# EUROPEAN PATENT APPLICATION

(11) **EP 4 776 627 A1**
(43) Date of publication of application: **15.07.2026**
(21) Application number: 23956060.0
(22) Date of filing: 18.10.2023
(51) Int. Cl.: H04N 21/2668

(54) **ROAD IMAGE PRESENTATION DEVICE, ROAD IMAGE PRESENTATION METHOD, ROAD IMAGE PRESENTATION PROGRAM, AND STORAGE MEDIUM**

(71) Applicant: Pioneer Corporation, Tokyo 113-0021 (JP)
(72) Inventor: KAWAGUCHI Akihiro, Tokyo 170-0013 (JP); MATSUZAKI Shin, Tokyo 170-0013 (JP)
(74) Representative: Manitz Finsterwald Patent- und Rechtsanwaltspartnerschaft mbB
(86) International application number: PCT/JP2023/037700
(87) International publication number: WO 2025/083810

(57) **Abstract**

One object is to provide a road image presentation device, a road image presentation method, a road image presentation program, and a storage medium that can present an appropriate road image according to an environmental condition, such as weather. The road image presentation device of the present invention includes: an accepting unit that accepts a road designation; an environmental condition acquiring unit that acquires an environmental condition including a weather condition; an image acquiring unit that acquires a conforming image as a presentation image when a storage unit stores the conforming image captured under an environmental condition acquired by the environmental condition acquiring unit, the conforming image being a past image captured of a road designated by the road designation, and that acquires a generated image generated based on an image of a road designated by the road designation and the acquired environmental condition as a presentation image when the storage unit does not store the conforming image, the storage unit storing a plurality of past images captured of a road; and a presentation control unit that performs a control for presenting the presentation image.

## Description

### TECHNICAL FIELD

The present invention relates to a road image presentation device, a road image presentation method, a road image presentation program, and a storage medium.

### BACKGROUND ART

There has been known a technique that presents an image captured by an on-vehicle camera to a user. For example, Patent Document 1 discloses a distribution system including a distribution server that performs distribution of image data according to a request of a user. In the distribution system, imaging position information and imaging environment information corresponding to the image data captured in various periods and environments are stored in a storage server. When the distribution system accepts a distribution request for image data, it performs searching of the image data corresponding to an imaging position condition and an imaging environment condition designated by the distribution request and distributes it.

### CITED DOCUMENTS

### PATENT LITERATURE

Patent Document 1: JP-A 2021-83034

### DISCLOSURE OF THE INVENTION

### PROBLEMS TO BE SOLVED BY THE INVENTION

One problem with the distribution system as described above is that it cannot distribute an image according to the request of the user when the image data corresponding to the designated imaging position condition and the imaging environment condition is not stored in the storage server.

The present invention has been made in consideration of the above-described points, and one object of which is to provide a road image presentation device, a road image presentation method, a road image presentation program, and a storage medium that can present an appropriate road image according to an environmental condition, such as weather.

### SOLUTIONS TO THE PROBLEMS

The invention according to claim 1 is a road image presentation device including: an accepting unit that accepts a road designation; an environmental condition acquiring unit that acquires an environmental condition including a weather condition; an image acquiring unit that acquires a conforming image as a presentation image when a storage unit stores the conforming image captured under an environmental condition acquired by the environmental condition acquiring unit, the conforming image being a past image captured of a road designated by the road designation, and that acquires a generated image generated based on an image of a road designated by the road designation and the acquired environmental condition as a presentation image when the storage unit does not store the conforming image, the storage unit storing a plurality of past images captured of a road; and a presentation control unit that performs a control for presenting the presentation image.

The invention according to claim 12 is a road image presentation method executed by a road image presentation device. The road image presentation method includes: an acceptance step of accepting a road designation; an environmental condition acquiring step of acquiring an environmental condition including a weather condition; an image acquiring step of acquiring a conforming image as a presentation image when a storage unit stores the conforming image captured under an environmental condition acquired in the environmental condition acquiring step, the conforming image being a past image captured of a road designated by the road designation, and acquiring a generated image generated based on an image of a road designated by the road designation and the acquired environmental condition as a presentation image when the storage unit does not store the conforming image, the storage unit storing a plurality of past images captured of a road; and a presentation control step of performing a control for presenting the presentation image.

The invention according to claim 13 is a road image presentation program executed by a road image presentation device including a computer. The road image presentation program causes the computer to execute: an acceptance step of accepting a road designation; an environmental condition acquiring step of acquiring an environmental condition including a weather condition; an image acquiring step of acquiring a conforming image as a presentation image when a storage unit stores the conforming image captured under an environmental condition acquired in the environmental condition acquiring step, the conforming image being a past image captured of a road designated by the road designation, and acquiring a generated image generated based on an image of a road designated by the road designation and the acquired environmental condition as a presentation image when the storage unit does not store the conforming image, the storage unit storing a plurality of past images captured of a road; and a presentation control step of performing a control for presenting the presentation image.

The invention according to claim 14 is a computer-readable storage medium storing a road image presentation program that causes a road image presentation device including a computer to execute: an acceptance step of accepting a road designation; an environmental condition acquiring step of acquiring an environmental condition including a weather condition; an image acquiring step of acquiring a conforming image as a presentation image when a storage unit stores the conforming image captured under an environmental condition acquired in the environmental condition acquiring step, the conforming image being a past image captured of a road designated by the road designation, and acquiring a generated image generated based on an image of a road designated by the road designation and the acquired environmental condition as a presentation image when the storage unit does not store the conforming image, the storage unit storing a plurality of past images captured of a road; and a presentation control step of performing a control for presenting the presentation image.

### BRIEF DESCRIPTION OF THE DRAWINGS

FIG. 1 is a schematic diagram illustrating an outline of a road image presentation system according to an embodiment of the present invention.
FIG. 2 is a drawing illustrating a configuration of a front seat section of an automobile according to the embodiment.
FIG. 3 is a block diagram illustrating an exemplary configuration of an on-vehicle device according to the embodiment.
FIG. 4 is a drawing illustrating an example of information transmitted from the on-vehicle device according to the embodiment to a server.
FIG. 5 is a block diagram illustrating an exemplary configuration of a server device according to the embodiment.
FIG. 6 is a drawing schematically illustrating an exemplary image generation model according to the embodiment.
FIG. 7 is a drawing schematically illustrating an exemplary image generation model according to the embodiment.
FIG. 8 is a drawing schematically illustrating an exemplary construction method for the image generation model according to the embodiment.
FIG. 9 is a drawing schematically illustrating an exemplary construction method for the image generation model according to the embodiment.
FIG. 10 is a flowchart illustrating an exemplary routine executed by the on-vehicle device according to the embodiment.
FIG. 11 is a flowchart illustrating an exemplary routine executed by the server device according to the embodiment.
FIG. 12 is a drawing illustrating an exemplary road image presented in the embodiment.
FIG. 13 is a drawing illustrating an exemplary road image presented in the embodiment.

### DESCRIPTION OF PREFERRED EMBODIMENTS

The following describes embodiments of the present invention in detail. In the following description and attached drawings, the same reference numerals are given to substantially the same or equivalent parts.

### [Embodiments]

A configuration of a road image presentation system 100 including a road image presentation device according to an embodiment is described with reference to the attached drawings.

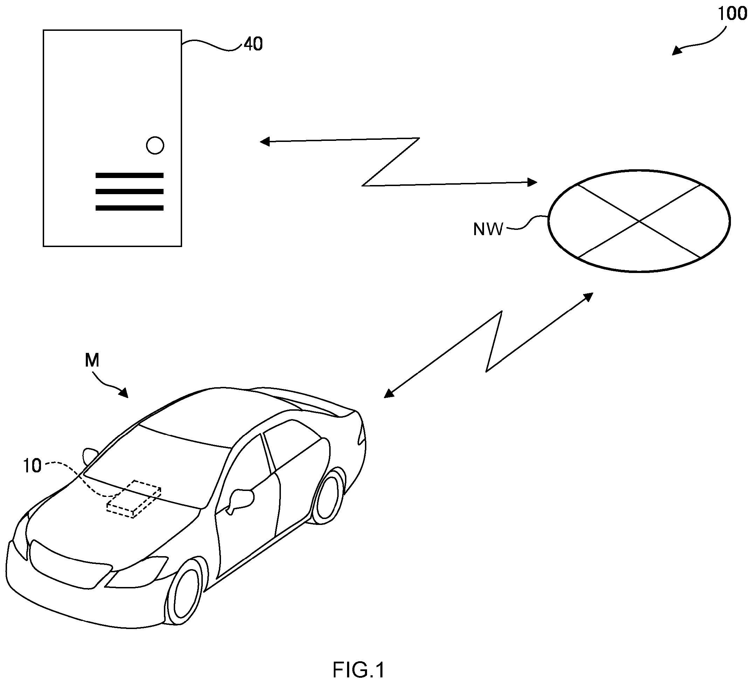

FIG. 1 illustrates an outline of the configuration of the road image presentation system 100. As illustrated in FIG. 1, the road image presentation system 100 is configured to include an on-vehicle device 10 as a road image presentation device and a server 40. In FIG. 1, a case where the on-vehicle device 10 is mounted in an automobile M is illustrated.

The on-vehicle device 10 and the server 40 can mutually transmit and receive data via a network NW, for example, using a communication protocol, such as TCP/IP and UDP/IP. The network NW can be constructed via, for example, a mobile communication network, wireless communication such as Wi-Fi (registered trademark), and Internet communication including wired communication.

The on-vehicle device 10 can control making a request to the server 40 for a road image as an image captured of a road designated by a user, such as a road near a destination, acquiring the road image from the server 40, and presenting it to the user. This request can include environmental information, which is information about weather, time, and the like.

The server 40 stores a past road image for each road, which is an image captured of the road, and transmits the road image according to the request from the on-vehicle device 10 to the on-vehicle device 10. Specifically, for example, information indicating a road designated by the user is sent as a request from the on-vehicle device 10, and the server 40 transmits the road image of the road to the on-vehicle device 10.

For the road designated according to a request from the on-vehicle device 10, when the server 40 retains a past road image that conforms to the environmental condition, such as weather and time, included in the request, the server 40 transmits the past road image to the on-vehicle device 10.

For the road designated according to a request from the on-vehicle device 10, when the server 40 does not retain a past road image that conforms to the environmental condition, such as weather and time, included in the request, the server 40 generates a road image according to the request using the road image of the designated road and the environmental condition included in the request and transmits it to the on-vehicle device 10.

In the embodiment, a description will be given of a case where the on-vehicle device 10 is a car navigation device, as an example. In addition, in the embodiment, a description will be given of a case where the on-vehicle device 10 is a terminal device of what is called a cloud-based car navigation device, as an example. In this case, the on-vehicle device 10 accepts from a user a destination for which the user desires guidance and transmits the destination to the server 40, and the server 40 generates the route to the destination.

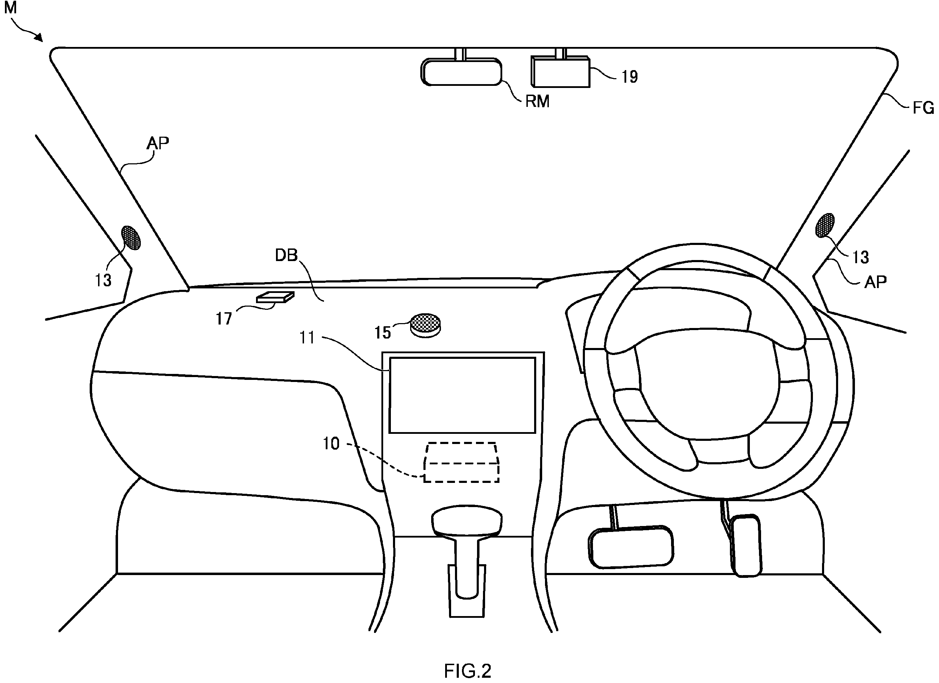

FIG. 2 is a perspective view illustrating the vicinity of a front seat of the automobile M in which the on-vehicle device 10 is mounted. FIG. 2 illustrates a case where the on-vehicle device 10 is attached inside a dashboard DB of the front seat of the automobile M as an attachment example.

A touch panel 11 is, for example, a touch panel monitor in which a display capable of displaying images, such as a liquid crystal display, is combined with a touchpad. The touch panel 11 is, for example, placed in a center console of the dashboard DB. It is only necessary to place the touch panel 11 in a location that is visible to the driver and can be reached by the driver. For example, the touch panel 11 may be attached on the dashboard DB.

The touch panel 11 can display a screen based on the control of the on-vehicle device 10. For example, guidance of a car navigation system is displayed on the touch panel 11. For example, a road image captured of a road designated by the user is displayed on the touch panel 11. For example, a road image according to the environmental condition, such as the current weather or the weather at the scheduled arrival time, of the road near the destination designated by the user is displayed on the touch panel 11.

In addition, the touch panel 11 can transmit a signal representing an input operation into the touch panel 11 accepted from the user to the on-vehicle device 10. For example, it is possible to perform operations related to car navigation system functions, such as setting the destination, via the touch panel 11. Further, it is possible to perform operations related to displaying a road image, such as designating a road for displaying a road image, via the touch panel 11.

Speakers 13 are, for example, disposed on an indoor side of A-pillars AP. The speakers 13 can emit sound, such as music and voice, based on the control of the on-vehicle device 10. For example, the voice for the guidance of the car navigation system is emitted from the speakers 13.

A microphone 15 is a microphone device that receives sound in a vehicle and is placed, for example, on the dashboard DB. The microphone 15 can be disposed in any place, such as in the vicinity of a rearview mirror RM, as long as it can receive the sound in the vehicle. For example, the operation for the car navigation system or the operation for displaying a road image may be performed via voice through the microphone 15.

A GPS receiver 17 is a device that receives a signal from a Global Positioning System (GPS) satellite (GPS signal). The GPS receiver 17 is, for example, placed on the dashboard DB. The GPS receiver 17 may be placed in any place, as long as it can receive a GPS signal. The GPS receiver 17 can transmit the received GPS signal to the on-vehicle device 10. The on-vehicle device 10 acquires current position information of the automobile M using the GPS signal.

A forward-facing camera 19 is an imaging device that shoots a front of the automobile M. In the embodiment, the forward-facing camera 19 is attached inside a windshield FG near the rearview mirror RM so that the front is a shooting direction. Note that the arrangement of the forward-facing camera 19 is not limited to this. For example, the forward-facing camera 19 may be attached to the dashboard DB.

For example, road images captured by the forward-facing camera 19 may be transmitted to the server 40 and stored in the server 40. In this case, the automobile M plays a role as a probe vehicle that collects road images. The automobile M may include, for example, a camera with the side or rear of the automobile M as its imaging direction, as a camera that captures road images.

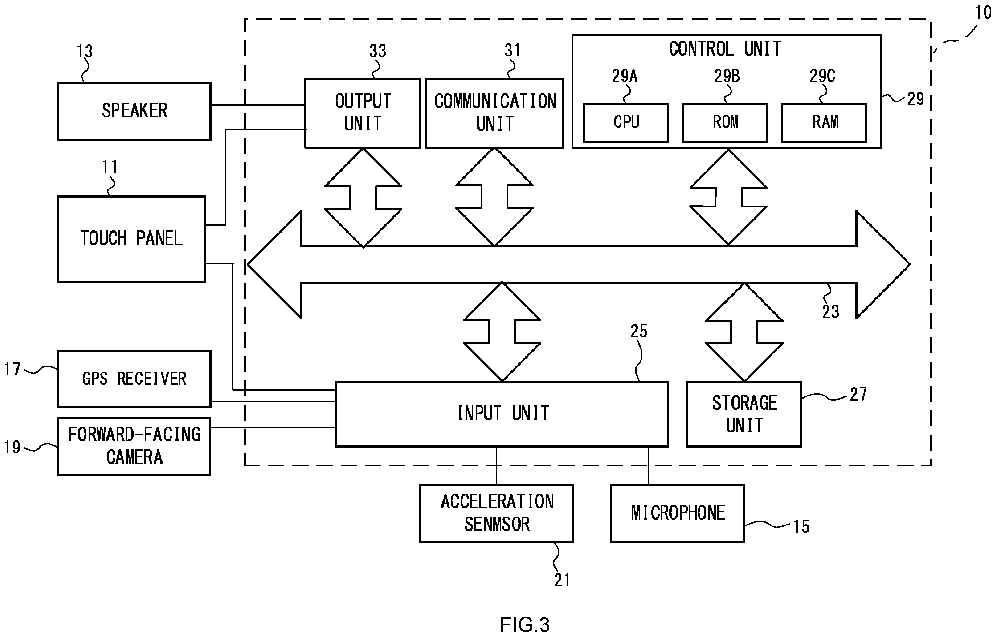

FIG. 3 is a block diagram illustrating a configuration of the on-vehicle device 10. For example, the on-vehicle device 10 is a device in which an input unit 25, a storage unit 27, a control unit 29, a communication unit 31, and an output unit 33 operate together via a system bus 23.

In addition, an acceleration sensor 21 is mounted in the automobile M. The acceleration sensor 21 can measure an acceleration of the automobile M and output a signal indicating the measured acceleration. The acceleration sensor 21 is a sensor that can detect the acceleration in a traveling direction of the automobile M when viewed from an upper side of the automobile M, that is, a front-rear direction. Further, the acceleration sensor can detect, for example, the acceleration in a lateral direction (width direction) perpendicular to the traveling direction of the automobile M.

The input unit 25 is an interface unit that communicatively connects the on-vehicle device 10 to the touch panel 11, a microphone 1, the GPS receiver 17, the forward-facing camera 19, and the acceleration sensor 21.

The on-vehicle device 10 can receive the signal indicating an input operation performed on the touchpad of the touch panel 11 via the input unit 25. For example, the on-vehicle device 10 can accept an input for setting the destination for the car navigation system performed on the touch panel 11 by the user via the input unit 25.

The on-vehicle device 10 can acquire voice data of the voice collected by the microphone 15 via the input unit 25. For example, the on-vehicle device 10 can accept an input operation through voice from the user via the input unit 25.

The on-vehicle device 10 can receive a GPS signal from the GPS receiver 17 via the input unit 25 and acquire the current position information of the on-vehicle device 10 from the GPS signal. The on-vehicle device 10 can also acquire the image captured by the forward-facing camera 19 via the input unit 25.

The on-vehicle device 10 can receive a signal indicating the acceleration measured by the acceleration sensor 21 via the input unit 25. The on-vehicle device 10 acquires, for example, the acceleration of the automobile M, based on the acceleration indicated by a sensor signal of the acceleration sensor 21. The on-vehicle device 10 may acquire, for example, the current position information of the automobile M, based on the acceleration indicated by the sensor signal of the acceleration sensor 21, in addition to the GPS signal from the GPS receiver 17.

The storage unit 27 is a storage device configured, for example, by a hard disk drive, Solid State Drive (SSD), flash memory, or the like. The storage unit 27 stores various programs executed in the on-vehicle device 10, such as an operating system and terminal software. The various programs include programs for executing processing related to presenting road images in the on-vehicle device 10.

The various programs may be acquired, for example, from another server device or the like via a network, or may be stored in storage media and read via various drive devices. That is, the various programs stored in the storage unit 27 can be transmitted via a network, or can be stored in computer-readable storage media and transferred.

In addition, the storage unit 27 stores map information including road maps. The map information is used, for example, to display the guidance of the car navigation system.

The control unit 29 is composed of a Central Processing Unit (CPU) 29A, a Read Only Memory (ROM) 29B, a Random Access Memory (RAM) 29C, and the like, and functions as a computer. The CPU 29A reads and executes various programs stored in the ROM 29B and the storage unit 27, thereby realizing various functions.

In the embodiment, the control unit 29 acquires a road image stored in the server 40 or a road image generated based on the stored road image from the server 40 and causes the touch panel 11 to display it, thereby performing the function of presenting the road image to the user, a car navigation system function, and the like.

The communication unit 31 is a communication device that transmits and receives data to and from external equipment according to instructions from the control unit 29. The communication unit 31 is, for example, a Network Interface Card (NIC) for connecting the on-vehicle device 10 to the network NW. The communication unit 31 is connected to the network NW described above and transmits and receives various kinds of data to and from the server 40. The control unit 29 transmits information indicating a road designation and an environmental condition to the server 40 via the communication unit 31.

The output unit 33 is an output interface unit for the touch panel 11 and the speakers 13. The control unit 29 can transmit an image signal to the touch panel 11 via the output unit 33 for display. In addition, the control unit 29 can transmit a voice signal to the speakers 13 to output a voice. The control unit 29 causes the touch panel 11 to display the road image received from the server 40 via the output unit 33.

### [Functions of Road Image Presentation Device]

The following describes the functions of the control unit 29 of the on-vehicle device 10. The control unit 29 acquires an image of a road designated by the user from the server 40. The control unit 29 also acquires a road image captured or generated under an environmental condition designated by the user, such as the weather, from the server 40. Alternatively, the control unit 29, for example, automatically acquires an environmental condition, such as the current weather, for the designated road and acquires a road image captured or generated under the acquired environmental condition from the server 40.

The control unit 29, for example, accepts an input operation designating a target road to display a road image via the touch panel 11. The control unit 29 functions as an accepting unit that accepts a road designation.

In addition, the control unit 29 acquires an environmental condition that is a condition under which the target road image to be displayed was captured. The environmental condition includes at least the weather. For example, the control unit 29 acquires current weather information around the designated road as an environmental condition from an external server that provides weather information. The environmental condition may include a traffic condition that indicates traffic volume. For example, the control unit 29 acquires current traffic information of the designated road as an environmental condition from an external server that provides traffic information.

Further, the environmental condition may include a temporal condition. The temporal condition is, for example, a condition of time that affects the appearance of a road image. For example, the time period in which a road image was captured is defined as a temporal condition, and, for example, by dividing a day into time periods such as morning, afternoon, evening, and night, it is possible to designate the outdoor brightness at the time the road image was acquired.

For example, when the time the user designates a road is a time period of daytime, the control unit 29 acquires the time period of daytime as an environmental condition and acquires an image captured in the time period of daytime or an image generated as an image captured in the time period of daytime from the server 40. In addition, for example, the control unit 29 may acquire the time designated by the user as a temporal condition, or, when the user sets a destination, may calculate an estimated arrival time at the destination and acquire the estimated arrival time as a temporal condition. The control unit 29 functions as an environmental condition acquiring unit that acquires an environmental condition, including a weather condition.

In the embodiment, when the control unit 29 accepts a road designation and acquires an environmental condition, it transmits information indicating the designated road and information indicating the environmental condition to the server 40, thereby requesting a road image.

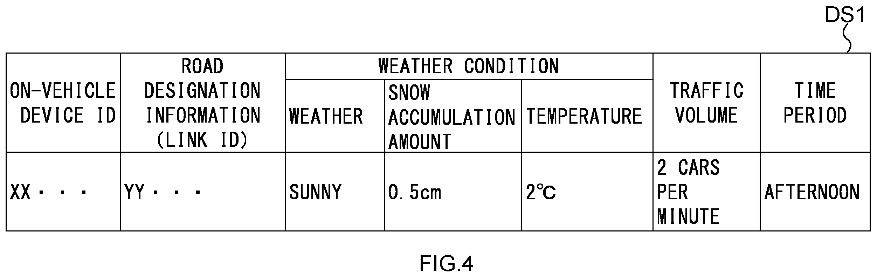

FIG. 4 is a drawing illustrating road image request information DS1, which is an example of road image request information transmitted by the control unit 29 of the on-vehicle device 10 to the server 40. As illustrated in FIG. 4, the road image request information DS1 includes road designation information associated with an on-vehicle device ID, which is an identifier that identifies the on-vehicle device 10. The road designation information is, for example, a road link ID that identifies a road link. For example, the road designation information may be information indicating a location on a road.

The road image request information DS1 further includes environment information. The environment information includes at least the weather and may further include a traffic condition indicating traffic volume and a temporal condition. The traffic volume may be expressed, for example, as the number of vehicles passing per unit time, or may be expressed as a numerical value indicating a traffic congestion level or crowdedness. The temporal condition may be, for example, time period, time, or date.

In the example illustrated in FIG. 4, the road image request information DS1 includes weather (that is, the state of the sky), snow accumulation amount, and temperature as the weather condition, and in addition to the weather information, it includes traffic volume and time period information indicating the distinction between day and night, time, or the like.

The control unit 29 transmits road image request information and then receives a road image stored in the server 40 or a road image generated in the server 40 from the server 40, thereby acquiring the road image as a presentation image to be presented on the touch panel 11. The control unit 29 functions as an image acquiring unit. The server 40 stores images (hereinafter also referred to as past images) acquired under various environmental conditions for each of a plurality of roads.

When the server 40 stores a conforming image that is a past image that conforms to the road designation and environmental condition included in the transmitted road image request information, that is, a past image captured of the road designated by the road designation that was captured under the environmental condition included in the road image request information (that is, under the environmental condition acquired by the control unit 29 as an environmental condition acquiring unit), the control unit 29 acquires the conforming image sent from the server 40 as a presentation image.

When the server 40 does not store the conforming image, the control unit 29 acquires a generated image sent from the server 40 as a presentation image. The generated image is generated in the server 40 based on the image of the road designated by the road designation and the environmental condition acquired by the environmental condition acquiring unit.

The control unit 29 functions as a presentation control unit by causing the touch panel 11 to display the presentation image acquired from the server 40.

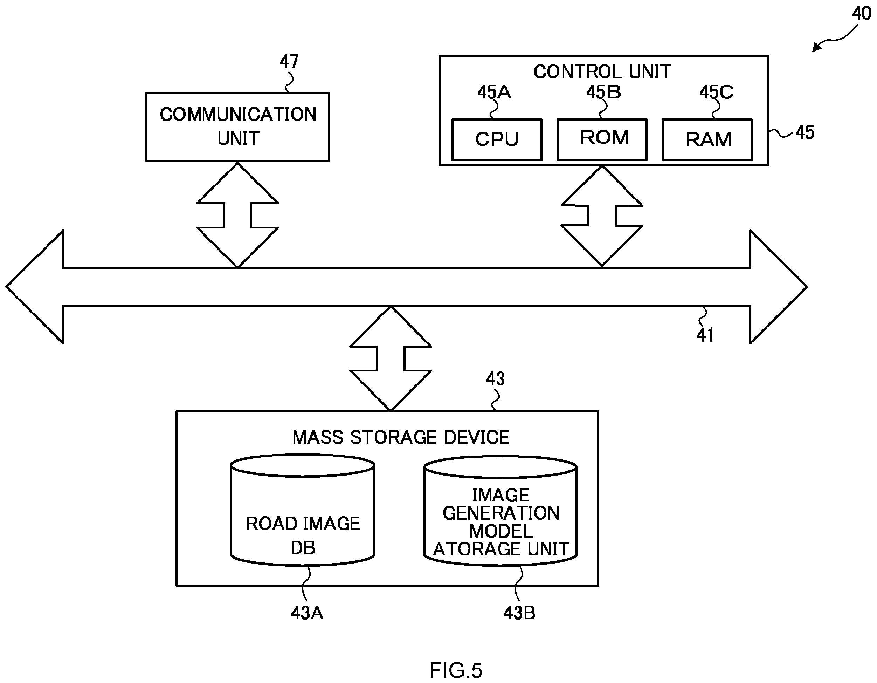

FIG. 5 is a block diagram illustrating a configuration of the server 40. For example, the server 40 is a device in which a mass storage device 43, a control unit 45, and a communication unit 47 operate together via a system bus 41.

The server 40 has a function of receiving road image request information, including a road designation and an environmental condition, from the on-vehicle device 10 and transmitting an image stored in the server 40 or an image generated based on the image stored in the server 40 according to the road designation and the environmental condition to the on-vehicle device 10.

In addition, the server 40 has a function of receiving current position information of the automobile M and information on a destination set by the user of the on-vehicle device 10 from the on-vehicle device 10 and generating a route to the destination based on the current position information and the destination information.

The mass storage device 43 is configured, for example, by a hard disk drive, solid state drive (SSD), or the like, and stores various programs, such as an operating system and software for the server 40.

In addition, the mass storage device 43 includes a road image database (in FIG. 5, road image DB) 43A. In the road image database 43A, images captured of roads are stored in association with the respective roads.

In this description, a road image captured of each road under a predetermined environmental condition is referred to as a reference image. In the embodiment, the reference image is typically a road image captured under sunny weather and in a time period of daytime (captured reference image). That is, the reference image is a road image captured under an environmental condition with good visibility. Alternatively, the reference image may be a road image generated as a road image under sunny weather and in a time period of daytime (generated reference image). That is, the reference image may be a road image generated as an image under an environmental condition with good visibility. In addition, in the embodiment, the road image database 43A further includes road images other than the reference image, that is, road images captured under various environmental conditions other than the predetermined environmental condition.

For example, each of the road images stored in the road image database 43A may be associated with a road link, or may be associated with a location on a road or a location on a map.

The mass storage device 43 also includes an image generation model storage unit 43B. In the embodiment, a plurality of image generation models are stored in the image generation model storage unit 43B.

The image generation model storage unit 43B stores a feature image generation model, which is an image generation model trained through machine learning to output, upon input of a reference image and an environmental condition, a road image in which the reference image is image-processed to have a feature corresponding to the environmental condition.

### [Feature Image Generation Model]

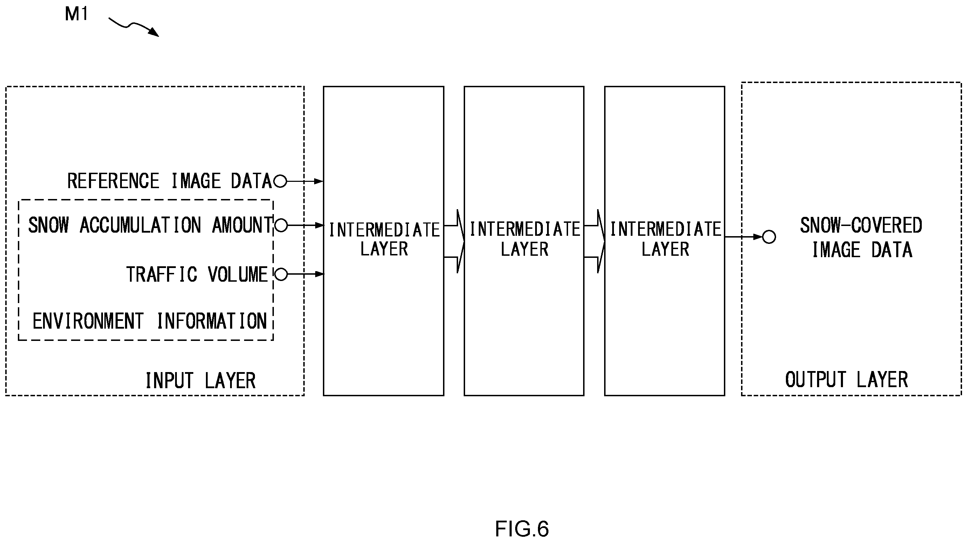

FIG. 6 is a drawing schematically illustrating a snow-covered image generation model M1, which is an exemplary feature image generation model. The snow-covered image generation model M1 illustrated in FIG. 6 includes a neural network constructed using deep learning. The neural network is composed of an input layer, two or three or more intermediate layers (hidden layers), and an output layer.

For example, reference image data, as well as a numerical value indicating a snow accumulation amount and a numerical value indicating traffic volume as numerical values indicating environment information, are input into the input layer of the snow-covered image generation model M1.

When the input into the input layer is performed, road image data having a feature corresponding to the environment information input into the input layer is output at the output layer. In the example illustrated in FIG. 6, road image data in which a reference image input into the input layer is image-processed to have a feature corresponding to the snow accumulation amount and the traffic volume is output from the output layer. For example, image data of a road image, which shows a state where accumulated snow corresponding to the input snow accumulation amount exists on a road included in the reference image and which includes a rut according to the input traffic volume in an accumulated snow part on the road, is output from the output layer.

The snow-covered image generation model M1, for example, is a trained model constructed through machine learning using supervised learning.

In this case, during the training of the snow-covered image generation model M1, for example, a snow-covered image actually captured of an arbitrary road in a state with accumulated snow, information indicating the environmental condition at the time the snow-covered image was captured, and a non-snow-covered image captured of the arbitrary road in a state without accumulated snow are used as a training dataset. Here, the information indicating the environmental condition includes the snow accumulation amount around the arbitrary road and the traffic volume per predetermined period of the road at the time the snow-covered image was captured. Then, the snow-covered image is specified as the ground truth data, and the training is performed while updating neural network parameters, for example, using error back-propagation, such that output data generated by applying image processing to the non-snow-covered image input into the model has a visual feature of the snow-covered image that is the ground truth data (that is, an accumulated snow state corresponding to the environmental condition). For example, the image data output from the model is compared with the snow-covered image, which is the ground truth data, to calculate an error. Depending on the magnitude of the error, the weight of each parameter of the neural network is modified. The output from the model and the weight are repeatedly modified to reduce the error.

Furthermore, the snow-covered image generation model M1 can be constructed by capturing a plurality of snow-covered images of a single road with different snow accumulation amounts or traffic volumes and using each of the plurality of snow-covered images as the ground truth data to perform the training as described above, or by performing the training as described above on each of numerous different roads.

The training method for the snow-covered image generation model M1 is not limited to the supervised learning as described above, and other known learning methods may also be used.

In other words, the snow-covered image generation model M1 as an image generation model is a trained model trained through machine learning, using a first snow-covered image, weather information, traffic volume information, and a first non-snow-covered image as a training dataset, such that an output generated by applying image processing to the first non-snow-covered image has a visual feature of the first snow-covered image. The first snow-covered image is an image captured of an arbitrary first road in a state with accumulated snow. The weather information includes at least the snow accumulation amount around the first road at the time the first snow-covered image was captured. The traffic volume information indicates the traffic volume of the first road at the time the first snow-covered image was captured. The first non-snow-covered image is an image captured of the first road in a state without accumulated snow.

In addition, in FIG. 6, an example has been described in which, by inputting a reference image and environment information into the snow-covered image generation model M1, a snow-covered image corresponding to the environment information is generated based on the reference image. However, an image used as the base for generating a snow-covered image (also referred to as an original image) is not limited to this. For example, road images captured under environmental conditions such as rainy or cloudy weather (non-snow-covered images other than the reference image) may also serve as input for the snow-covered image generation model M1.

In other words, the snow-covered image generation model M1 is an image generation model that generates a snow-covered image according to the input based on the original image, which is an image captured of a target road in a state without accumulated snow, weather information including at least the snow accumulation amount around the target road, and traffic volume information indicating the traffic volume of the target road. The snow-covered image is an image of the target road in a state with accumulated snow corresponding to the snow accumulation amount and the traffic volume.

In addition, an example has been described in which the snow accumulation amount and traffic volume are input as the environmental condition. However, the environmental condition input into the snow-covered image generation model M1 may further include a weather condition other than the snow accumulation amount, such as information indicating the look of the sky, including sunny, rainy, cloudy, or other conditions, and information indicating the temperature, or a temporal condition, such as information indicating time and time period.

Additionally, as a feature image generation model, separately from the snow-covered image generation model M1, for example, a rain image generation model that generates a road image in a rainy state may be constructed based on a reference image and an environmental condition, including a precipitation amount, and stored in the image generation model storage unit 43B.

Further, for example, a cloudy-image generation model that generates a road image in a cloudy weather state may be constructed based on a reference image and an environmental condition, including a cloud amount, and stored in the image generation model storage unit 43B.

### [Reference Image Generation Model]

The image generation model storage unit 43B also stores a reference image generation model, which outputs a reference image having a feature corresponding to a predetermined environmental condition upon input of a road image captured under a condition other than the predetermined environment. Here, a description is given, assuming a predetermined environment of sunny weather and a time period of daytime.

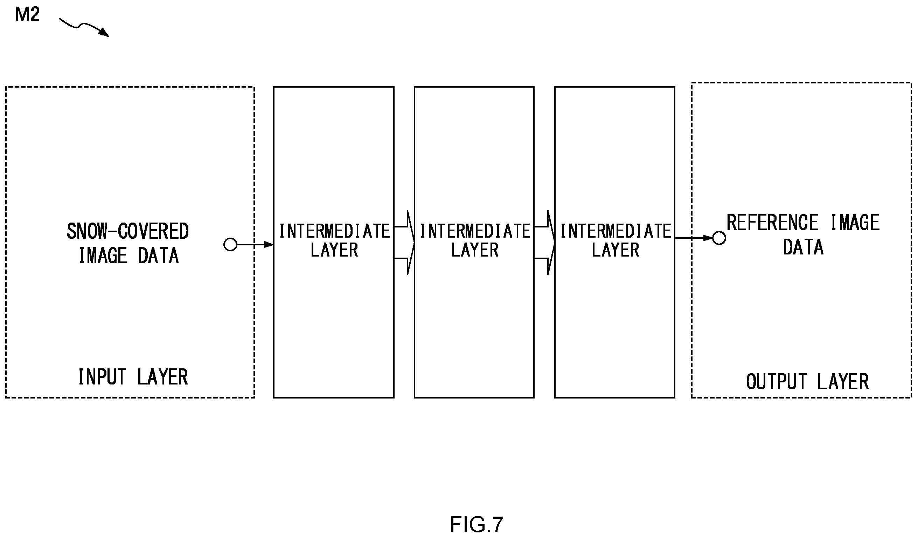

FIG. 7 is a drawing schematically illustrating a reference image generation model M2, which is an exemplary reference image generation model. The reference image generation model M2 illustrated in FIG. 7 is a neural network constructed using deep learning. The neural network is composed of an input layer, two or three or more intermediate layers (hidden layers), and an output layer.

For example, snow-covered image data is input into the input layer of the image generation model M2 as a road image captured under a condition other than the predetermined environment. When the input into the input layer is performed, reference image data having a feature corresponding to the predetermined environmental condition (sunny daytime) is output at the output layer.

In the example illustrated in FIG. 7, an image in a sunny weather state, in which accumulated snow in the snow-covered image data input into the input layer is removed, and the road surface appears, is output as the reference image data.

The reference image generation model M2, for example, is a trained model constructed through machine learning using supervised learning.

In this case, during the training of the reference image generation model M2, for example, a reference image actually captured of an arbitrary road in a state without accumulated snow under the environmental condition for the reference image, and a snow-covered image captured of the same arbitrary road in a state with accumulated snow are used as a training dataset. Then, the reference image is specified as the ground truth data, and the training is performed while updating neural network parameters using error back-propagation, such that output data generated by applying image processing to the snow-covered image input into the model has a visual feature of the reference image that is the ground truth data (that is, an image captured under sunny weather without accumulated snow and in the time period of daytime). Furthermore, by performing the training as described above on each of numerous different roads, the reference image generation model M2 can be constructed.

The training method for the reference image generation model M2 is not limited to the supervised learning as described above, and other known training methods may also be used.

In addition, in FIG. 7, an example has been described in which, by inputting a snow-covered image into the reference image generation model M2, a reference image corresponding to sunny weather without accumulated snow and in the time period of daytime is generated based on the snow-covered image. However, an image other than the snow-covered image, for example, a road image captured under environmental conditions such as rainy or cloudy weather, may also serve as input for the reference image generation model M2.

In other words, the reference image generation model M2 as a non-snow-covered image generation model is a trained model trained through machine learning, using a second non-snow-covered image and a second snow-covered image as a training dataset, such that an output generated by applying image processing to the second snow-covered image has a visual feature of the second non-snow-covered image. The second non-snow-covered image is an image captured of an arbitrary second road in a state without accumulated snow. The second snow-covered image is captured of the second road in a state with accumulated snow.

### [Image Generation Model using CycleGAN]

In the embodiment, the snow-covered image generation model M1 as a first image generation model and the reference image generation model M2 as a second image generation model have been trained through machine learning using a cycle generative adversarial network (CycleGAN) and have further improved accuracy in generating a road image having a feature corresponding to an environmental condition. For example, with the snow-covered image generation model M1, it is possible to generate an image that appropriately has a feature, such as accumulated snow, even for a road with a different shape from the road in the road image used for training.

In CycleGAN, a discriminator D1 for the reference image generation model M2 and a discriminator D2 for the snow-covered image generation model M1 are used.

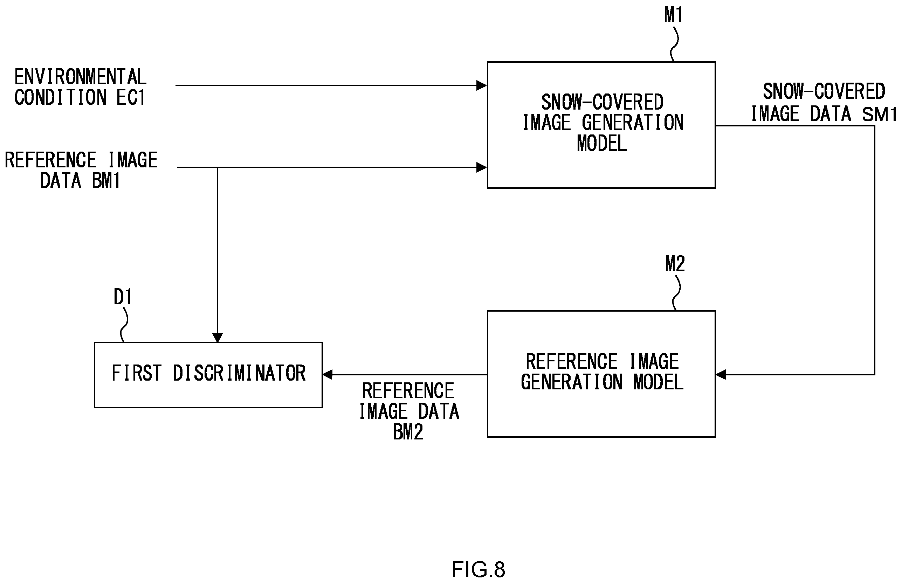

FIG. 8 is a block diagram schematically illustrating a GAN configuration that optimizes the reference image generation model M2. As illustrated in FIG. 8 and described in FIG. 6, when an environmental condition EC1 and a reference image data BM1 are input into the snow-covered image generation model M1, snow-covered image data SM1 is output. When the output snow-covered image data SM1 is input into the reference image generation model M2, reference image data BM2 is output as described in FIG. 7.

The first discriminator D1 compares the reference image data BM1 with the reference image data BM2 and discriminates whether or not the reference image data BM2 is the reference image data BM1, which is the original image. That is, the first discriminator D1 performs an authenticity determination.

In the GAN configuration in FIG. 8, parameters of the first discriminator D1 and the reference image generation model M2 are updated so that the first discriminator D1 improves its discrimination accuracy, and the reference image generation model M2 enhances its accuracy in reproducing the feature of the reference image data BM1. As a result, the first discriminator D1 and the reference image generation model M2 are trained in which the first discriminator D1 and the reference image generation model M2 compete with one another. This reduces the difference between the features of the reference image data BM1 and the reference image data BM2. In other words, the feature of the reference image data BM2 becomes closer to the feature of the reference image data BM1.

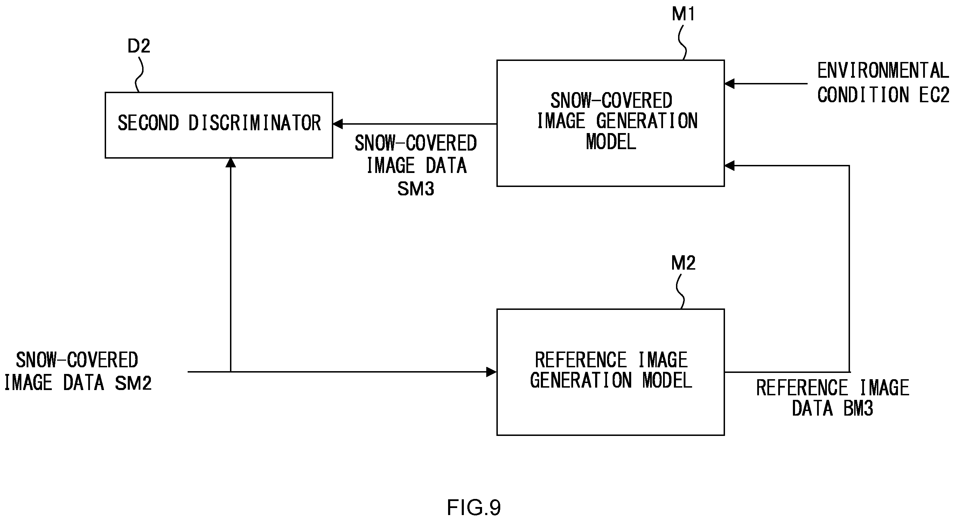

FIG. 9 is a block diagram schematically illustrating a GAN configuration that optimizes the snow-covered image generation model M1. As illustrated in FIG. 9 and described in FIG. 7, when snow-covered image data SM2 is input into the reference image generation model M2, reference image data BM3 is output. When the output reference image data BM3 and an environmental condition EC2 are input into the snow-covered image generation model M1, snow-covered image data SM3 is output as described in FIG. 6.

The second discriminator D2 compares the snow-covered image data SM2 with the snow-covered image data SM3 and discriminates whether or not the snow-covered image data SM3 is the snow-covered image data SM2, which is the original image. That is, the second discriminator D2 performs an authenticity determination.

In the GAN configuration in FIG. 9, parameters of the second discriminator D2 and the snow-covered image generation model M1 are updated so that the second discriminator D2 improves its discrimination accuracy, and the accuracy in reproducing the feature of the snow-covered image data SM2 is enhanced. As a result, the second discriminator D2 and the snow-covered image generation model M1 are trained in which the second discriminator D2 and the snow-covered image generation model M1 compete with one another. This reduces the difference between the features of the snow-covered image data SM2 and the snow-covered image data SM3. In other words, the feature of the snow-covered image data SM3 becomes closer to the feature of the snow-covered image data SM2.

By repeatedly performing the optimization in FIG. 8 and the optimization in FIG. 9, the accuracy of the snow-covered image generation model M1 and the reference image generation model M2 is improved. Each of the snow-covered image generation model M1 and the reference image generation model M2 can be said to be a trained model trained through machine learning using the cycle generative adversarial network (CycleGAN) formed to include the snow-covered image generation model M1 and the reference image generation model M2.

Referring to FIG. 5 again, a map information database (not illustrated), which stores map information including road maps, is contained in the mass storage device 43. The map information is used, for example, for route generation in a navigation function. The road images in the road image DB 43A may be stored in association with the map information in the map information database.

The control unit 45 is composed of a Central Processing Unit (CPU) 45A, a Read Only Memory (ROM) 45B, a Random Access Memory (RAM) 45C, and the like, and functions as a computer. The CPU 45A reads and executes various programs stored in the ROM 45B and the mass storage device 43, thereby realizing various functions.

The communication unit 47 is connected to the network NW described above and transmits and receives various kinds of data to and from the on-vehicle device 10. For example, the control unit 45 receives road image request information including a road designation and an environmental condition from the on-vehicle device 10 via the communication unit 47.

When the road image database 43A stores a conforming image that is an image captured of the road designated by the road designation included in the road image request information received from the on-vehicle device 10, and that is a road image captured under the environmental condition included in the road image request information, the control unit 45 transmits the conforming image to the on-vehicle device 10.

When the road image database 43A does not store the conforming image, the control unit 45 transmits a generated image to the on-vehicle device 10. The generated image is generated to correspond to the road designated by the road designation included in the above road image request information, and correspond to the environmental condition included in the above road image request information.

For example, when the road image database 43A stores the reference image of the designated road captured under sunny weather and in the time period of daytime and does not store the conforming image for the designated road, the control unit 45 transmits a generated image generated based on the reference image of the designated road and the received environmental condition to the on-vehicle device 10. For example, the control unit 45 inputs the reference image, a snow accumulation amount, and traffic volume into the snow-covered image generation model M1 and transmits the output snow-covered image to the on-vehicle device 10.

For example, when the road image database 43A does not store the reference image of the designated road captured under sunny weather and in the time period of daytime and does not store the conforming image for the designated road, the control unit 45 generates a reference image and transmits a generated image generated based on the generated reference image and the received environmental condition to the on-vehicle device 10. The reference image is generated based on an image, other than a reference image, of the designated road stored in the road image database 43A.

For example, the control unit 45 inputs an image under rainy weather stored in the road image database 43A into the reference image generation model M2, inputs the output reference image and the received environmental condition into the snow-covered image generation model M1, and transmits the output snow-covered image to the on-vehicle device 10.

### [Control Routine]

The following describes a control routine executed in the road image presentation system 100 of the embodiment.

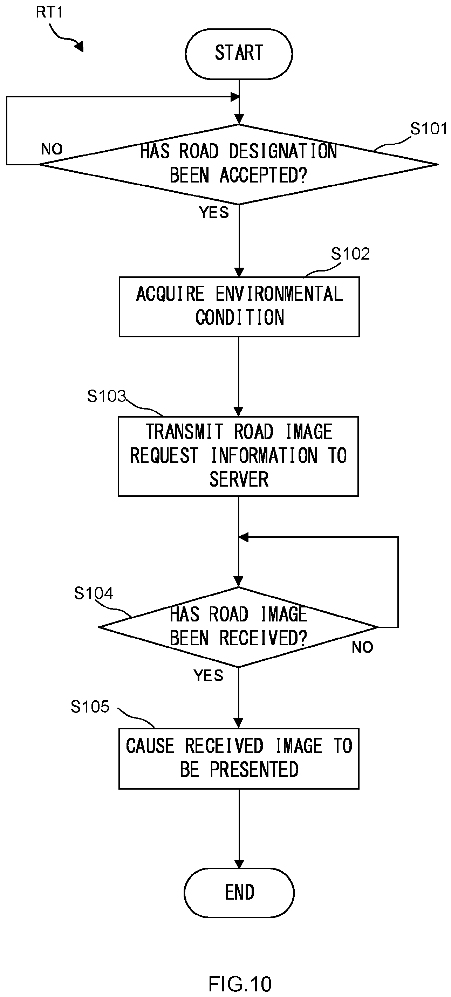

FIG. 10 is a flowchart illustrating a control routine RT1, which is an exemplary control routine executed by the control unit 29 of the on-vehicle device 10. The control unit 29 starts the control routine RT1, for example, when it accepts an input operation by a user instructing to display a road image.

When the control routine RT1 is started, the control unit 29 determines whether or not a road designation has been accepted (Step S101). In Step S101, for example, when the control unit 29 accepts an input operation to designate a road or a location on a road via the touch panel 11, it determines that the road designation has been accepted.

In Step S101, when the control unit 29 determines that the road designation has not been accepted (Step S101: NO), it repeatedly executes Step S101 to determine again whether or not the road designation has been accepted.

In Step S101, when the control unit 29 determines that the road designation has been accepted (Step S101: YES), it acquires an environmental condition (Step S102). As described above, the environmental condition is a condition that includes at least a weather condition and may further include a traffic condition or a temporal condition. It indicates the environmental condition that should be used as a shooting condition for a road image that the user wants to confirm.

In Step S102, for example, the control unit 29 acquires current weather information around the road designated in Step S101 as the weather condition. In Step S102, for example, a traffic condition including the current traffic volume on the designated road may be acquired from road traffic information and the like. In addition, at least part of the environmental condition may be specified by the user, and the control unit 29 may acquire the environmental condition input by the user.

After executing Step S102, the control unit 29 transmits the information containing the road designation acquired in Step S101 and the environmental condition acquired in Step S102 to the server 40 as road image request information (Step S103).

After executing Step S103, the control unit 29 determines whether or not the road image has been received from the server 40 (Step S104). In Step S104, for example, a past image captured of the road designated by the road designation and stored in the server 40 or a generated image generated in the server 40 can be received.

In Step S104, when the control unit 29 determines that the road image has not been received (Step S104: NO), it repeatedly executes Step S104 to determine again whether or not the road image has been received.

In Step S105, when the control unit 29 determines that the road image has been received (Step S104: YES), it causes the touch panel 11 to display the received road image (Step S105).

After executing Step S105, the control unit 29 ends the control routine RT1.

With the control routine RT1, for example, a road image reflecting the environmental condition, such as the current weather condition near the designated road, can be presented. For example, such a road image is presented, thereby allowing the user to confirm the current road state.

In Step S102 of the control routine RT1, the control unit 29 may acquire a future environmental condition for the designated road. For example, if a future date and time is specified by the user, weather forecast information for the specified date and time around the designated road may be acquired as the weather condition. Furthermore, expected traffic volume for the designated road at the specified date and time may be acquired as a traffic condition. This enables, for example, the user to confirm the future road state at the estimated arrival time at the destination, and the like, through an image.

Weather forecast information may include, for example, forecast information on a snow accumulation amount. In addition, the future environmental condition may include forecast information on traffic volume. The forecast information on traffic volume may be acquired, for example, based on statistical data on traffic volume. Furthermore, the forecast information on traffic volume may be acquired in relation to the snow accumulation amount. For example, from data on the past snow accumulation amount, a date and time on which the snow accumulation amount was close to the forecast value of the snow accumulation amount may be identified within the same time period as the estimated arrival time, and the statistical value of the traffic volume on the date and time may be used as the expected traffic volume.

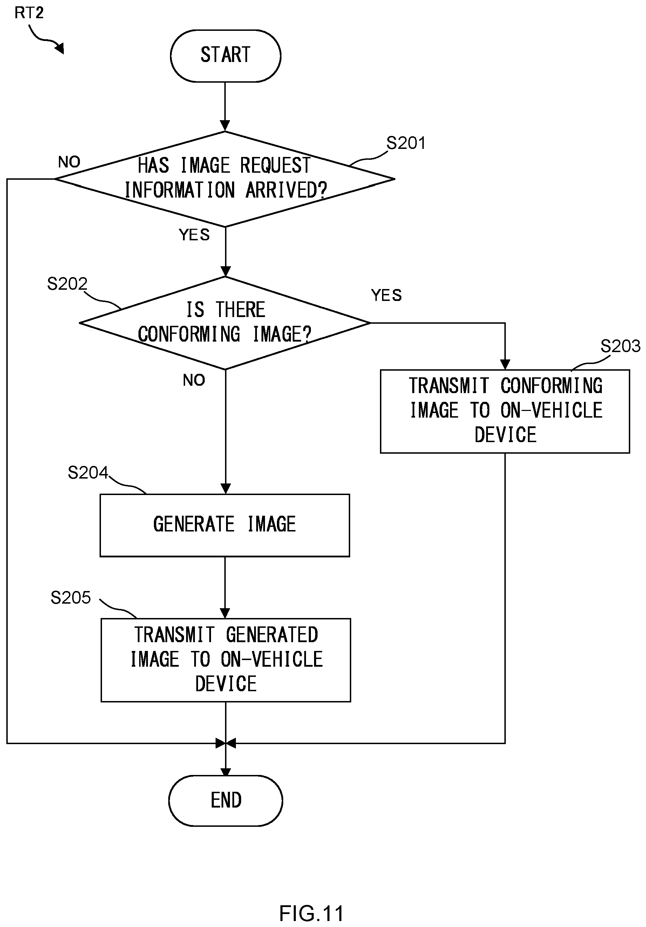

FIG. 11 is a flowchart illustrating a control routine RT2, which is an exemplary control routine executed by the control unit 45 of the server 40. The control unit 45, for example, repeatedly executes the control routine RT2 when the server 40 is powered on.

When the control routine RT2 is started, the control unit 45 determines whether or not image request information has arrived (Step S201). In Step S201, when the control unit 45 receives information including a road designation and an environmental condition, as illustrated in FIG. 4, for example, from the on-vehicle device 10, it determines that the image request information has arrived.

In Step S201, when the control unit 45 determines that image request information has not arrived after a lapse of a predetermined time (Step S201: NO), it ends the control routine RT2 and starts a new control routine RT2.

In Step S201, when the control unit 45 determines that image request information has arrived (Step S201: YES), it searches the road image database 43A of the mass storage device 43 and determines whether or not an image captured of a road designated by the road designation received from the on-vehicle device 10, which is a conforming image captured under the received environmental condition, is stored (Step S202).

In Step S202, when the control unit 45 determines that the conforming image is stored (Step S202: YES), it transmits the conforming image to the on-vehicle device 10 (Step S203).

In Step S202, when the control unit 45 determines that the conforming image is not stored (Step S202: NO), it generates a presentation image, which is a road image to be presented by the on-vehicle device 10, based on an image of the road designated by the road designation received from the on-vehicle device 10 and the received environmental condition (Step S204).

In Step S204, for example, by inputting a reference image captured of the designated road and the received environmental condition into an image generation model, the control unit 45 generates a road image having a feature corresponding to the environmental condition.

In Step S204, for example, by inputting the reference image captured of the designated road and the received environmental condition, including the snow accumulation amount and traffic volume, into the snow-covered image generation model M1, the control unit 45 can generate a snow-covered image in a state with accumulated snow corresponding to the snow accumulation amount and traffic volume.

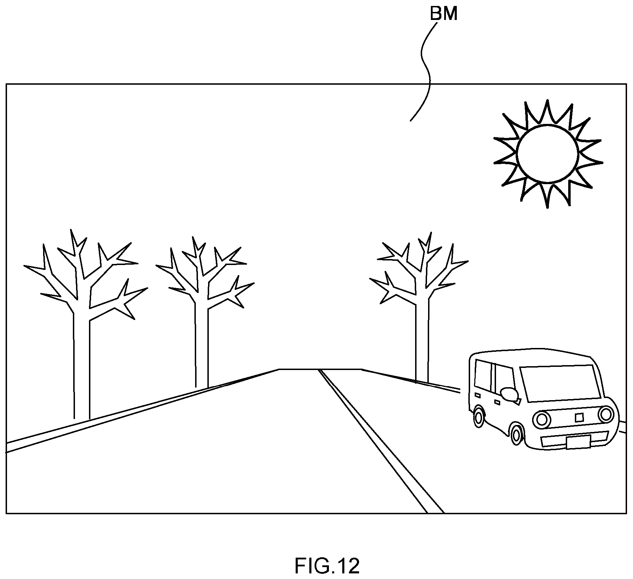

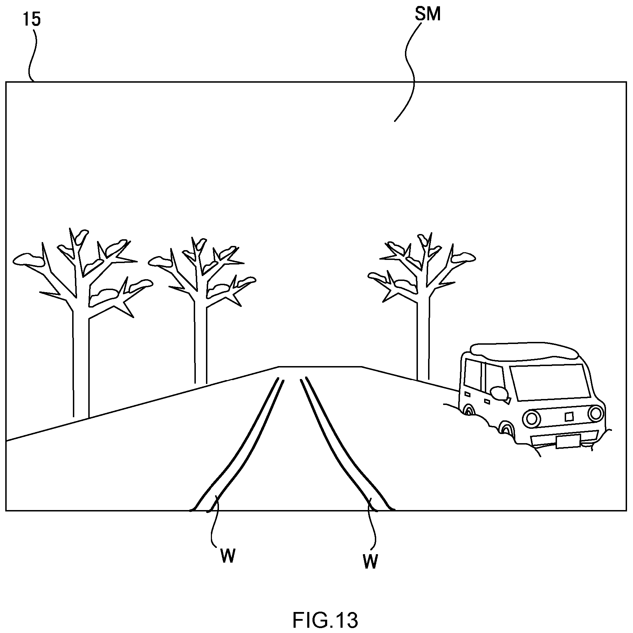

For example, by inputting a reference image BM as illustrated in FIG. 12 and the environmental condition, including the snow accumulation amount and traffic volume, into the snow-covered image generation model M1, it is possible to generate a snow-covered image SM that has a feature, such as the degree of development of a rut W corresponding to the traffic volume, in addition to the state of accumulated snow corresponding to the snow accumulation amount, as illustrated in FIG. 13. Thus, if there is accumulated snow, by including traffic volume in the parameters to be input, it is possible to generate an image that shows the accumulated snow state including ruts corresponding to the traffic volume.

In Step S204, for example, when the reference image of the designated road is not retained in the road image database 43A, by inputting an image, other than a reference image, captured of the designated road into the reference image generation model M2 and inputting the output reference image and the environmental condition into the snow-covered image generation model M1 or another feature image generation model, the control unit 45 generates a road image having a feature corresponding to the environmental condition.

Note that in Step S204, in place of image generation by the image generation model or in addition to image generation by the image generation model, a road image processed by simply adding rain or clouds to an image of the road designated by the road designation based on the environmental condition may be generated.

After executing Step S204, the control unit 45 transmits the generated image generated in Step S204 to the on-vehicle device 10 (Step S205). The generated image received in the on-vehicle device 10 is presented to the user via the touch panel 11.

After executing Step S205, the control unit 45 ends the control routine RT2.

As described above in detail, the road image presentation device of the embodiment includes an accepting unit, an environmental condition acquiring unit, an image acquiring unit, and a presentation control unit. The accepting unit accepts a road designation. The environmental condition acquiring unit acquires an environmental condition including a weather condition. The image acquiring unit acquires a conforming image as a presentation image when a storage unit stores the conforming image captured under the environmental condition acquired by the environmental condition acquiring unit. The conforming image is a past image captured of a road designated by the road designation. The image acquiring unit acquires a generated image generated based on an image of the road designated by the road designation and the acquired environmental condition as a presentation image when the storage unit does not store the conforming image. The storage unit stores a plurality of past images captured of a road. The presentation control unit performs a control for presenting the presentation image.

Such a configuration enables the acquisition and presentation of an image generated in a server, even when no images conform to the designated road and the environmental condition among the images captured in advance.

In addition, the snow-covered image generation model of the embodiment is an image generation model that generates a snow-covered image according to the input based on the original image, which is an image captured of a target road in a state without accumulated snow, weather information including at least the snow accumulation amount around the target road, and traffic volume information indicating the traffic volume of the target road. The snow-covered image is an image of the target road in a state with accumulated snow corresponding to the above snow accumulation amount and the traffic volume.

With the image generation model, for example, it is possible to generate a snow-covered image that reproduces the extent of rut formation corresponding to the traffic volume, in addition to accumulated snow corresponding to the snow accumulation amount. Since the extent of rut formation greatly affects the ease of driving a vehicle when driving on a snow-accumulating road, the user who is presented with such a snow-covered image, for example, can confirm the state of the road at the destination or the like, and make necessary preparations.

Therefore, with the embodiment, a road image presentation device, a road image presentation method, a road image presentation program, a storage medium, and an image generation model that enable presenting an appropriate road image according to an environmental condition, such as weather, can be provided.

For example, the user can confirm the current or future road state of the destination and make preparations as necessary.

In the embodiment described above, an example has been described in which images captured under various environmental conditions are stored in the road image database of the server 40 in addition to the reference image. However, this should not be construed in a limiting sense. Only reference images captured under a predetermined condition may be stored in the road image database. As a result, the amount of road image data stored in advance can be reduced. In that case, for example, images under environmental conditions other than the predetermined condition may be generated, as necessary. In addition, for example, a reference image may be presented for environmental conditions other than accumulated snow.

Further, to reduce the amount of road image data to be stored, for example, road images may be deleted after a predetermined period has elapsed so that only the real-time image is retained in the road image database, or the number of images retained may be limited so that only the most recent images are retained. The road image database of the server 40 may be stored on an external server.

In the above-described embodiment, the configurations and the like of the on-vehicle device 10, the server 40, the routines, and the image generation models are merely examples and can be appropriately selected, combined, or modified according to usage and the like.

An on-vehicle device may have all or part of the functions of the server 40 according to the above-described embodiment. Alternatively, a server may have part of the functions of the on-vehicle device 10. For example, the control unit of the on-vehicle device 10 may have at least part of the image generation models possessed by the server 40 in the above embodiment, and based on the road image received from the server 40, a road image may be generated using an image generation model and used as a presentation image. In addition, for example, the control unit of the server 40 may have at least part of the function of acquiring an environmental condition possessed by the on-vehicle device 10 in the above embodiment. When a user operates the on-vehicle device 10 to designate a road and a future date and time, weather forecast information for the specified date and time around the designated road and expected traffic volume for the designated road may be acquired.

In the above embodiment, a case where the on-vehicle device 10 is a car navigation device has been described, but this should not be construed in a limiting sense. The on-vehicle device 10 may be, for example, a drive recorder. In addition, the on-vehicle device 10 is not limited to being mounted in a vehicle, but may be a terminal device, such as a smartphone, a tablet, a PC, or a wearable terminal.

### DESCRIPTION OF REFERENCE SIGNS

- 10: On-vehicle device
- 11: Touch panel
- 13: Speaker
- 15: Microphone
- 17: GPS receiver
- 19: Forward-facing camera
- 21: Acceleration sensor
- 25: Input unit
- 27: Storage unit
- 29: Control unit
- 31: Communication unit
- 33: Output unit
- 40: Server
- 43: Mass storage device
- 43A: Road image database
- 43B: Image generation model storage unit
- 45: Control unit
- 47: Communication unit

## Claims

1. A road image presentation device comprising:
an accepting unit that accepts a road designation;
an environmental condition acquiring unit that acquires an environmental condition including a weather condition;
an image acquiring unit that acquires a conforming image as a presentation image when a storage unit stores the conforming image captured under an environmental condition acquired by the environmental condition acquiring unit, the conforming image being a past image captured of a road designated by the road designation, and that acquires a generated image generated based on an image of a road designated by the road designation and the acquired environmental condition as a presentation image when the storage unit does not store the conforming image, the storage unit storing a plurality of past images captured of a road; and
a presentation control unit that performs a control for presenting the presentation image.

2. The road image presentation device according to claim 1, wherein
when the storage unit does not store the conforming image, the image acquiring unit acquires a generated image generated based on the past image of a road designated by the road designation and the acquired environmental condition as the presentation image.

3. The road image presentation device according to claim 1, wherein
the weather condition includes a snow accumulation amount.

4. The road image presentation device according to claim 3, wherein
the environmental condition includes traffic volume.

5. The road image presentation device according to claim 1, wherein
the environmental condition acquiring unit acquires a current environmental condition including a current weather condition around a road designated by the road designation.

6. The road image presentation device according to claim 1, wherein
the environmental condition acquiring unit acquires a future environmental condition including weather forecast information that forecasts a future weather condition around a road designated by the road designation.

7. The road image presentation device according to claim 6, wherein
the weather forecast information includes forecast information on a snow accumulation amount.

8. The road image presentation device according to claim 6 or 7, wherein
the future environmental condition includes forecast information on traffic volume.

9. The road image presentation device according to claim 1, wherein
the storage unit stores a reference image that is an image captured for each of a plurality of roads under a predetermined environmental condition, and
when the storage unit does not store the conforming image, the image acquiring unit acquires a generated image generated based on the reference image and the acquired environmental condition as the presentation image.

10. The road image presentation device according to claim 1, wherein
when the storage unit does not store the conforming image, the image acquiring unit acquires a generated image generated based on a reference image and the acquired environmental condition as the presentation image, the reference image being generated using a reference image generation model that outputs a reference image having a feature corresponding to a predetermined environmental condition upon input of a road image captured under a condition other than the predetermined environmental condition.

11. The road image presentation device according to claim 9 or 10, wherein
when the storage unit does not store the conforming image, the image acquiring unit acquires a generated image as the presentation image, the generated image being generated using an image generation model trained through machine learning to output a road image having a feature corresponding to the input environmental condition upon input of the reference image and the environmental condition.

12. A road image presentation method executed by a road image presentation device, the road image presentation method comprising:
an acceptance step of accepting a road designation;
an environmental condition acquiring step of acquiring an environmental condition including a weather condition;
an image acquiring step of acquiring a conforming image as a presentation image when a storage unit stores the conforming image captured under an environmental condition acquired in the environmental condition acquiring step, the conforming image being a past image captured of a road designated by the road designation, and acquiring a generated image generated based on an image of a road designated by the road designation and the acquired environmental condition as a presentation image when the storage unit does not store the conforming image, the storage unit storing a plurality of past images captured of a road; and
a presentation control step of performing a control for presenting the presentation image.

13. A road image presentation program executed by a road image presentation device including a computer, the road image presentation program causes the computer to execute:
an acceptance step of accepting a road designation;
an environmental condition acquiring step of acquiring an environmental condition including a weather condition;
an image acquiring step of acquiring a conforming image as a presentation image when a storage unit stores the conforming image captured under an environmental condition acquired in the environmental condition acquiring step, the conforming image being a past image captured of a road designated by the road designation, and acquiring a generated image generated based on an image of a road designated by the road designation and the acquired environmental condition as a presentation image when the storage unit does not store the conforming image, the storage unit storing a plurality of past images captured of a road; and
a presentation control step of performing a control for presenting the presentation image.

14. A computer-readable storage medium storing a road image presentation program that causes a road image presentation device including a computer to execute:
an acceptance step of accepting a road designation;
an environmental condition acquiring step of acquiring an environmental condition including a weather condition;
an image acquiring step of acquiring a conforming image as a presentation image when a storage unit stores the conforming image captured under an environmental condition acquired in the environmental condition acquiring step, the conforming image being a past image captured of a road designated by the road designation, and acquiring a generated image generated based on an image of a road designated by the road designation and the acquired environmental condition as a presentation image when the storage unit does not store the conforming image, the storage unit storing a plurality of past images captured of a road; and
a presentation control step of performing a control for presenting the presentation image.
